# EUROPEAN PATENT APPLICATION

(11) **EP 4 216 036 A1**
(43) Date of publication of application: **26.07.2023**
(21) Application number: 22201774.1
(22) Date of filing: 20.05.2014
(51) Int. Cl.: G06F 3/01, H04B 5/00

(54) **METHOD FOR PERFORMING OPERATION ON INTELLIGENT WEARING DEVICE BY USING GESTURE, AND INTELLIGENT WEARING DEVICE**

(62) Divisional of application: 19192469.5
(71) Applicant: Huawei Technologies Co., Ltd., Shenzhen, Guangdong 518129, (CN)
(72) Inventor: YANG, Xuqiao, Shenzhen, 518129 (CN); CHEN, Xi, Shenzhen, 518129 (CN)
(74) Representative: Goddar, Heinz J.

(57) **Abstract**

Embodiments of the present invention provide a method for performing an operation on an intelligent wearing device by using a gesture, and an intelligent wearing device. First, an operation gesture is identified according to an operation gesture signal; then, a control instruction is determined according to the identified operation gesture; and finally, the intelligent wearing device is controlled, according to the control instruction, to perform a corresponding operation. The intelligent wearing device is controlled, according to an operation gesture of a user, to perform a corresponding operation, which ensures accuracy of performing, by the user, the operation on the intelligent wearing device.

## Description

### TECHNICAL FIELD

The present invention relates to an operation technology for an intelligent wearing device, and in particular, to a method for performing an operation on an intelligent wearing device by using a gesture, and an intelligent wearing device.

### BACKGROUND

With development of intelligent wearing devices, the intelligent wearing devices, particularly represented by a smart band and an intelligent wristwatch, start to gain popularity in every aspect of life. When an intelligent wearing device is used, a message transferred by a mobile phone, including information such as a phone call, a short messaging service message, or wake-up, may be acquired by using the intelligent wearing device. A user pushes a message by performing an operation on a surface of the intelligent wearing device, to implement interaction with the mobile phone.

With development of technologies, there are increasing applications for intelligent wearing. Although an application (Application, APP for short) vendor performs APP adaptation exclusively for a mobile wearing device, to optimize operation experience, because a screen that is of a general intelligent wearing device and is used for a user operation is relatively small, it is difficult for a user to accurately perform an operation on the intelligent wearing device by using a finger on such a small screen.

### SUMMARY

Embodiments of the present invention provide a method for performing an operation on an intelligent wearing device by using a gesture, and an intelligent wearing device, so as to implement accuracy of performing, by a user, an operation on the intelligent wearing device.

A first aspect of the present invention provides a method for performing an operation on an intelligent wearing device by using a gesture, where the method is applied to the intelligent wearing device, and the method includes:
receiving an operation gesture signal;
identifying an operation gesture according to the operation gesture signal;
determining a control instruction according to the identified operation gesture; and
controlling, according to the control instruction, the intelligent wearing device to perform a corresponding operation.

In a first possible implementation manner of the first aspect, before the receiving an operation gesture signal, the method further includes:
transmitting an infra-red signal; and
the receiving an operation gesture signal includes:
receiving a reflected signal reflected by the operation gesture to the infra-red signal.

In a second possible implementation manner of the first aspect, the receiving an operation gesture signal includes:
receiving an infra-red signal transmitted by the operation gesture.

With reference to the first aspect and either of the first and the second possible implementation manners of the first aspect, in a third possible implementation manner of the first aspect, the identifying an operation gesture according to the operation gesture signal specifically includes:
performing analog-to-digital conversion on the operation gesture signal to obtain a digital signal;
determining whether the digital signal is a preset digital signal; and
if the digital signal is the preset digital signal, determining the operation gesture according to the preset digital signal.

A second aspect of the present invention provides an intelligent wearing device, including:
a receiving module, configured to receive an operation gesture signal;
an identifying module, configured to identify an operation gesture according to the operation gesture signal received by the receiving module;
a determining module, configured to determine a control instruction according to the operation gesture identified by the identifying module; and
a control module, configured to control, according to the control instruction determined by the determining module, the intelligent wearing device to perform a corresponding operation.

In a first possible implementation manner of the second aspect, the intelligent wearing device further includes:
a transmitting module, configured to: before the receiving module receives the operation gesture signal, transmit an infra-red signal, where
the receiving module is specifically configured to:
   receive a reflected signal reflected by the operation gesture to the infra-red signal.

In a second possible implementation manner of the second aspect, the receiving module is specifically configured to:
receive an infra-red signal transmitted by the operation gesture.

With reference to the second aspect and either of the first and the second possible implementation manners of the second aspect, in a third possible implementation manner of the second aspect, the identifying module is specifically configured to:
perform, by the identifying module, analog-to-digital conversion on the operation gesture signal to obtain a digital signal;
determine, by the identifying module, whether the digital signal is a preset digital signal; and
if the digital signal is the preset digital signal, determine, by the identifying module, the operation gesture according to the preset digital signal.

A third aspect of the present invention provides an intelligent wearing device, including:
a receiver, configured to receive an operation gesture signal;
a memory, configured to prestore a correspondence of a digital signal, an operation gesture, and a control instruction; and
a processor, configured to identify an operation gesture according to the operation gesture signal, where
the processor is further configured to determine, according to the correspondence stored in the memory, a control instruction corresponding to the identified operation gesture; and
the processor is further configured to control, according to the control instruction, the intelligent wearing device to perform a corresponding operation.

In a first possible implementation manner of the third aspect, the intelligent wearing device further includes:
an infra-red transmitter, configured to: before the receiver receives the operation gesture signal, transmit an infra-red signal, where
the receiver is specifically configured to:
   receive a reflected signal reflected by the operation gesture to the infra-red signal.

In a second possible implementation manner of the third aspect, the receiver is specifically configured to:
receive an infra-red signal transmitted by the operation gesture.

With reference to the third aspect and either of the first and the second possible implementation manners of the third aspect, in a third possible implementation manner of the third aspect, that the processor is configured to identify an operation gesture according to the operation gesture signal includes:
Performing analog-to-digital conversion on the operation gesture signal to obtain a digital signal;
determining according to the correspondence stored in the memory, whether the digital signal is a preset digital signal; and
if the digital signal is the preset digital signal, determining the operation gesture according to the preset digital signal.

Embodiments of the present invention provide a method for performing an operation on an intelligent wearing device by using a gesture, and an intelligent wearing device. First, an operation gesture is identified according to an operation gesture signal; then, a control instruction is determined according to the identified operation gesture; and finally, the intelligent wearing device is controlled, according to the control instruction, to perform a corresponding operation. The intelligent wearing device is controlled, according to an operation gesture of a user, to perform a corresponding operation, which ensures accuracy of performing, by the user, the operation on the intelligent wearing device.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG 1 is a flowchart of a method for performing an operation on an intelligent wearing device by using a gesture according to an embodiment of the present invention;
FIG 2 is a reflected signal of an operation gesture of momentarily passing over a screen of an intelligent wearing device;
FIG. 3 is a reflected signal of an operation gesture of ephemerally hovering over a screen of an intelligent wearing device;
FIG 4 is an infra-red signal of an operation gesture of momentarily passing over a screen of an intelligent wearing device;
FIG 5 is an infra-red signal of an operation gesture of ephemerally hovering over a screen of an intelligent wearing device;
FIG 6 is a schematic structural diagram of an intelligent wearing device according to an embodiment of the present invention;
FIG 7 is a schematic structural diagram of an intelligent wearing device according to another embodiment of the present invention;
FIG 8 is a schematic structural diagram of an intelligent wearing device according to still another embodiment of the present invention; and
FIG 9 is a schematic structural diagram of an intelligent wearing device according to yet another embodiment of the present invention.

### DETAILED DESCRIPTION OF THE EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

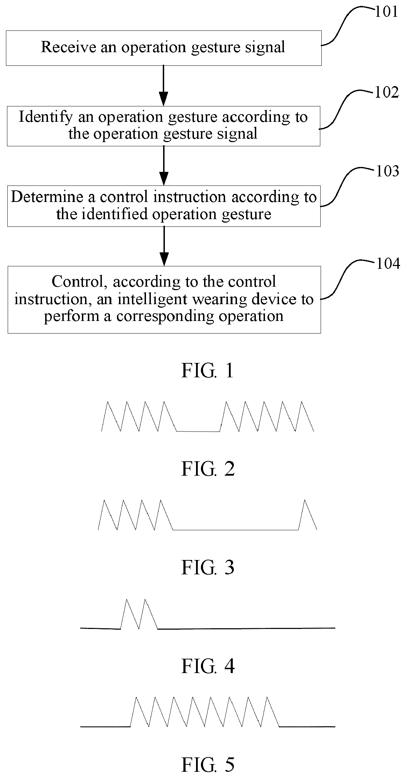

FIG 1 is a flowchart of a method for performing an operation on an intelligent wearing device by using a gesture according to an embodiment of the present invention. As shown in FIG 1, the method includes:
Step 101: Receive an operation gesture signal.

Optionally, in an embodiment of the present invention, the intelligent wearing device has a capability of transmitting an infra-red signal. Before the intelligent wearing device receives the operation gesture signal, an infra-red transmitter in the intelligent wearing device transmits an infra-red signal, where the infra-red transmitter may be an infra-red light emitting diode (Infra-Red Light Emitting Diode, IR LED for short). After shielding a screen of the intelligent wearing device, an operation gesture of a user reflects the infra-red signal transmitted by the intelligent wearing device, which may be specifically that the operation gesture of the user reflects the infra-red signal transmitted by the IR LED. Then, the intelligent wearing device receives a reflected signal of the infra-red signal, which may be specifically that a proximity sensor (Proximity Sensor, Prox Sensor for short) in the intelligent wearing device receives the reflected signal that is of the infra-red signal and is transmitted by the IR LED, where the reflected signal of the infra-red signal is the operation gesture signal.

Optionally, in another embodiment of the present invention, the intelligent wearing device has a capability of sensing an external infra-red signal. That the intelligent wearing device receives the operation gesture signal is specifically as follows: When the operation gesture of the user shields the screen of the intelligent wearing device, an infra-red sensing component in the intelligent wearing device may sense an infra-red signal transmitted by the operation gesture, thereby acquiring the infra-red signal transmitted by the operation gesture of the user, where the infra-red signal transmitted by the operation gesture of the user is the operation gesture signal.

Step 102: Identify an operation gesture according to the operation gesture signal.

Optionally, in an embodiment of the present invention, the operation gesture signal is a reflected signal reflected by the operation gesture to the infra-red signal transmitted by the intelligent wearing device due to shielding of the screen of the intelligent wearing device by the operation gesture of the user.

Specifically, after receiving the reflected signal of the infra-red signal, the intelligent wearing device first converts the received reflected signal into a digital signal. Reflected signals reflected by different operation gestures to the infra-red signal are different; therefore, digital signals obtained by converting the different reflected signals are also different. For example, FIG 2 shows a reflected signal of an operation gesture of momentarily passing over a screen of an intelligent wearing device, and FIG 3 shows a reflected signal of an operation gesture of ephemerally hovering over a screen of an intelligent wearing device. When the operation gesture is momentarily passing over the screen of the intelligent wearing device, in this case, hover time of the operation gesture is quite short compared with that of the operation gesture of ephemerally hovering over the screen of the intelligent wearing device. In this case, a reflected value that is of the infra-red signal and is generated by the operation gesture is smaller; therefore, time for which a reflected signal is located at a valley in a waveform of the reflected signal is shorter.

Optionally, in another embodiment of the present invention, the operation gesture signal is the infra-red signal transmitted by the operation gesture of the user.

Specifically, after the intelligent wearing device receives the sensed infra-red signal transmitted by the operation gesture of the user, infra-red signals transmitted by different operation gestures are different; therefore, the infra-red signals received by the intelligent wearing device are also different. For example, FIG 4 shows an infra-red signal of an operation gesture of momentarily passing over a screen of an intelligent wearing device, and FIG 5 shows an infra-red signal of an operation gesture of ephemerally hovering over a screen of an intelligent wearing device. When the operation gesture is momentarily passing over the screen of the intelligent wearing device, in this case, hover time of the operation gesture is quite short compared with that of the operation gesture of ephemerally hovering over the screen of the intelligent wearing device. In this case, a value that is of the infra-red signal and is generated by the operation gesture is smaller; therefore, time for which the infra-red signal is located at a crest in a waveform of the infra-red signal is shorter.

The operation gesture may be specifically momentarily passing over the screen of the intelligent wearing device, ephemerally hovering over the screen of the intelligent wearing device, or the like, where the operation gesture is not limited in the present invention.

Further, the intelligent wearing device converts the operation gesture signal into a digital signal that can be processed by the intelligent wearing device, determines whether the digital signal after conversion is a preset digital signal in the intelligent wearing device, and if the digital signal after conversion is the preset digital signal, the operation gesture of the user can be identified according to the preset digital signal.

The preset digital signal is a digital signal that is corresponding to the operation gesture of the user and that is prestored in the intelligent wearing device in advance.

For example, Table 1 shows a correspondence between a preset digital signal in an intelligent wearing device and an operation gesture.

**Table 1: Table of a correspondence between a preset digital signal in an intelligent wearing device and an operation gesture**

| **Preset digital signal** | **Operation gesture** |
|---|---|
| 111111110011111111 | Momentarily pass over a screen of an intelligent wearing device |
| 111100000000001111 | Hover over a screen of an intelligent wearing device for three seconds |

It is assumed that the intelligent wearing device has a function of transmitting an infra-red signal. When an operation gesture of a user is momentarily passing over the screen of the intelligent wearing device, the intelligent wearing device receives a reflected signal that is of an infra-red signal and is reflected due to shielding of the screen of the intelligent wearing device by the operation gesture of the user, and converts the reflected signal of the infra-red signal into a digital signal, where the digital signal after conversion is 111111110011111111. The intelligent wearing device matches the digital signal obtained after conversion with a preset digital signal, and determines, according to the table of the correspondence between a preset digital signal and an operation gesture, that the operation gesture of the user is momentarily passing over the screen of the intelligent wearing device.

Further, it may be specifically that an infra-red signal is converted into a digital signal by using an analog to digital converter (Analog to Digital Converter, ADC for short).

Step 103: Determine a control instruction according to the identified operation gesture.

Optionally, a preset control instruction corresponding to the operation gesture is determined according to the identified operation gesture, where the control instruction is used to control the intelligent wearing device to perform a corresponding operation.

Step 104: Control, according to the control instruction, the intelligent wearing device to perform a corresponding operation.

Specifically, according to the matched preset digital signal, the operation gesture of the user is identified, and the control instruction corresponding to the identified operation gesture of the user is determined, where the control instruction is used to control the intelligent wearing device to perform the corresponding operation. For example, when the intelligent wearing device needs to perform an operation of answering or hanging up a call, when the operation gesture of the user is momentarily passing over the intelligent wearing device, the operation of answering a call is performed, and when the operation gesture of the user is ephemerally hovering over the intelligent wearing device, the operation of hanging up a call is performed, where time for hovering over the intelligent wearing device may be set according to a user preference, the control instruction is not limited to answering a call or hanging up a call, and a control instruction may also be increased according to a user requirement.

Further, the control instruction is prestored in the intelligent wearing device in advance and is corresponding to the operation gesture.

Controlling the intelligent wearing device to perform the corresponding operation may be specifically answering a call, hanging up a call, switching a clock, switching a calendar, performing an operation on a mobile phone application, or the like, which is not limited in the present invention.

For example, the following table shows a correspondence of a preset digital signal in an intelligent wearing device, an operation gesture, and a control instruction.

| **Preset digital signal** | **Operation gesture** | **Control instruction** |
|---|---|---|
| 111111110011111111 | Momentarily pass over a screen of an intelligent wearing device | Answer a call |
| 111100000000001111 | Hover over a screen of an intelligent wearing device for three seconds | Hang up a call |

It is assumed that the intelligent wearing device needs to perform an operation of hanging up a call, and the intelligent wearing device has a capability of transmitting an infra-red signal. Specifically, after a mobile terminal of a user has an incoming call, the mobile terminal activates the intelligent wearing device by using Bluetooth, and after the intelligent wearing device receives an activation signal, the screen of the intelligent wearing device is lighted up and an incoming call interface is displayed on the screen of the intelligent wearing device. Meanwhile, a Prox Sensor and an IR LED in the intelligent wearing device are also activated, and the IR LED autonomously transmits an infra-red signal. When the operation gesture of the user is hovering over the screen of the intelligent wearing device for three seconds, in this case, the Prox Sensor receives a reflected signal reflected by the operation gesture of the user to the infra-red signal due to shielding of the screen of the intelligent wearing device by the operation gesture of the user, and the intelligent wearing device converts the received reflected signal of the infra-red signal into a digital signal, where the digital signal obtained by converting the reflected signal of the infra-red signal is 111100000000001111. The intelligent wearing device matches the digital signal obtained after conversion with a preset digital signal, determines, according to the correspondence between a preset digital signal and an operation gesture, that the operation gesture of the user is hovering over the screen of the intelligent wearing device for three seconds, and outputs, according to the determined operation gesture of the user, a control instruction corresponding to the operation gesture of the user, that is, performs an operation of hanging up a call.

Optionally, when the intelligent wearing device is configured to perform a corresponding operation of the mobile terminal, before the intelligent wearing device transmits an infra-red signal or senses an infra-red signal, the activation signal sent by the mobile terminal may further be received by using Bluetooth.

The activation signal may be used to activate the intelligent wearing device to display an operation that needs to be performed by the mobile terminal.

After receiving, by using Bluetooth, the activation signal sent by the mobile terminal, the intelligent wearing device may further display an operation interface on the screen.

Specifically, in an embodiment of the present invention, the intelligent wearing device may be activated in an event triggering manner, that is, when the mobile terminal needs to perform an operation, the mobile terminal transmits the activation signal to the intelligent wearing device by using Bluetooth. Specifically, the activation signal may be used to activate the intelligent wearing device, so as to light up the screen of the intelligent wearing device and display the operation interface on the screen of the intelligent wearing device.

In another embodiment of the present invention, the intelligent wearing device may be activated according to a time period preset by the mobile terminal. For example, when the mobile terminal presets a period for activating the intelligent wearing device to five minutes, in this case, regardless of whether the mobile terminal needs to perform an operation within the period, the mobile terminal transmits, within each period, an activation signal to the mobile terminal by using Bluetooth. When the mobile terminal does not need to perform an operation, the activation signal may be used to activate the intelligent wearing device, so as to light up the screen of the intelligent wearing device; when the mobile terminal needs to perform an operation, the activation signal may be used to activate the intelligent wearing device, so as to light up the screen of the intelligent wearing device and display the operation interface on the screen of the intelligent wearing device. A manner used to activate the intelligent wearing device is not limited to the two types, where the manner of activating the intelligent wearing device is not limited in the present invention.

According to the method for performing an operation on an intelligent wearing device by using a gesture provided in this embodiment of the present invention, first, an operation gesture is identified according to an operation gesture signal; then, a control instruction is determined according to the identified operation gesture; and finally, the intelligent wearing device is controlled, according to the control instruction, to perform a corresponding operation. The intelligent wearing device is controlled, according to an operation gesture of a user, to perform a corresponding operation, which ensures accuracy of performing, by the user, the operation on the intelligent wearing device.

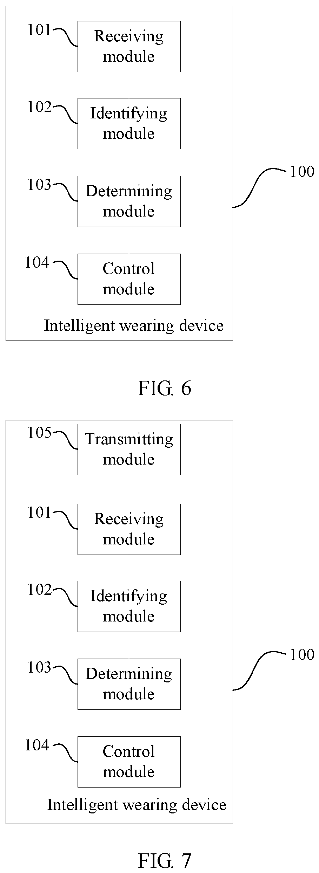

FIG 6 is a schematic structural diagram of an intelligent wearing device according to an embodiment of the present invention. As shown in FIG 6, the intelligent wearing device 100 includes a receiving module 101, an identifying module 102, a determining module 103, and a control module 104.

The receiving module 101 is configured to receive an operation gesture signal.

The identifying module 102 is configured to identify an operation gesture according to the operation gesture signal received by the receiving module 101.

The determining module 103 is configured to determine a control instruction according to the operation gesture identified by the identifying module 102.

The control module 104 is configured to control, according to the control instruction determined by the determining module 103, the intelligent wearing device to perform a corresponding operation.

In addition, as shown in FIG 7, for the intelligent wearing device 100, the intelligent wearing device 100 may further include a transmitting module 105, configured to: before the receiving module 101 receives the operation gesture signal, transmit an infra-red signal.

Further, the receiving module 101 is specifically configured to:
receive a reflected signal reflected by the operation gesture to the infra-red signal.

Optionally, the receiving module 101 is specifically configured to:
receive an infra-red signal transmitted by the operation gesture.

Further, the identifying module 102 is specifically configured to:
perform, by the identifying module 102, analog-to-digital conversion on the operation gesture signal to obtain a digital signal;
determine, by the identifying module 102, whether the digital signal is a preset digital signal; and
if the digital signal is the preset digital signal, determine, by the identifying module 102, the operation gesture according to the preset digital signal.

The intelligent wearing device 100 provided in this embodiment may be configured to execute the technical solution in the method embodiment shown in FIG 1. Implementation principles and technical effects of the intelligent wearing device 100 are similar, and details are not described again.

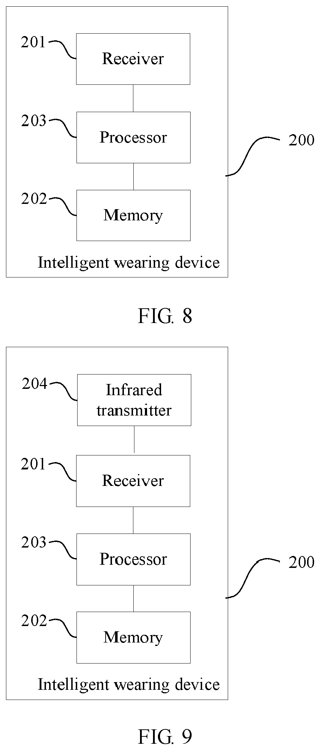

FIG 8 is a schematic structural diagram of an intelligent wearing device according to still another embodiment of the present invention. As shown in FIG 8, the intelligent wearing device 200 includes a receiver 201, a memory 202, and a processor 203.

The receiver 201 is configured to receive an operation gesture signal.

The memory 202 is configured to prestore a correspondence of a digital signal, an operation gesture, and a control instruction.

The processor 203 is configured to identify an operation gesture according to the operation gesture signal.

The processor 203 is further configured to determine, according to the correspondence stored in the memory 202, a control instruction corresponding to the identified operation gesture.

The processor 203 is further configured to control, according to the determined control instruction, the intelligent wearing device to perform a corresponding operation.

In addition, as shown in FIG 9, for the intelligent wearing device 200, the intelligent wearing device 200 may further include:
an infra-red transmitter 204, configured to: before the receiver 201 receives the operation gesture signal, transmit an infra-red signal.

The receiver 201 is specifically configured to:
receive a reflected signal reflected by the operation gesture to the infra-red signal.

Optionally, the receiver 201 is specifically configured to:
receive an infra-red signal transmitted by the operation gesture.

Further, that the processor 203 is configured to identify an operation gesture according to the operation gesture signal includes:
performing, by the processor 203, analog-to-digital conversion on the operation gesture signal to obtain a digital signal;
determining, by the processor 203 according to the correspondence stored in the memory 202, whether the digital signal is a preset digital signal; and
if the digital signal is the preset digital signal, determining, by the processor 203, the operation gesture according to the preset digital signal.

The intelligent wearing device 200 provided in this embodiment may be configured to execute the technical solution in the method embodiment shown in FIG 1. Implementation principles and technical effects of the intelligent wearing device 200 are similar, and details are not described again.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The storage medium includes any medium that can store program code, such as a ROM, a RAM, a magnetic disk, or an optical disc.

Further embodiments of the present invention are provided in the following. It should be noted that the numbering used in the following section does not necessarily need to comply with the numbering used in the previous sections.

Embodiment 1. A method for performing an operation on an intelligent wearing device by using a gesture, wherein the method is applied to the intelligent wearing device, and the method comprises:
receiving an operation gesture signal;
identifying an operation gesture according to the operation gesture signal;
determining a control instruction according to the identified operation gesture; and
controlling, according to the control instruction, the intelligent wearing device to perform a corresponding operation.

Embodiment 2. The method according to embodiment 1, wherein before the receiving an operation gesture signal, the method further comprises:
transmitting an infra-red signal; and
the receiving an operation gesture signal comprises:
receiving a reflected signal reflected by the operation gesture to the infra-red signal.

Embodiment 3. The method according to embodiment 1, wherein the receiving an operation gesture signal comprises:
receiving an infra-red signal transmitted by the operation gesture.

Embodiment 4. The method according to any one of embodiments 1 to 3, wherein the identifying an operation gesture according to the operation gesture signal specifically comprises:
performing analog-to-digital conversion on the operation gesture signal to obtain a digital signal;
determining whether the digital signal is a preset digital signal; and
if the digital signal is the preset digital signal, determining the operation gesture according to the preset digital signal.

Embodiment 5. An intelligent wearing device, comprising:
a receiving module, configured to receive an operation gesture signal;
an identifying module, configured to identify an operation gesture according to the operation gesture signal received by the receiving module;
a determining module, configured to determine a control instruction according to the operation gesture identified by the identifying module; and
a control module, configured to control, according to the control instruction determined by the determining module, the intelligent wearing device to perform a corresponding operation.

Embodiment 6. The intelligent wearing device according to embodiment 5, further comprising:
a transmitting module, configured to: before the receiving module receives the operation gesture signal, transmit an infra-red signal, wherein
the receiving module is specifically configured to:
receive a reflected signal reflected by the operation gesture to the infra-red signal.

Embodiment 7. The intelligent wearing device according to embodiment 5, wherein the receiving module is specifically configured to:
receive an infra-red signal transmitted by the operation gesture.

Embodiment 8. The intelligent wearing device according to any one of embodiments 5 to 7, wherein the identifying module is specifically configured to:
perform analog-to-digital conversion on the operation gesture signal to obtain a digital signal;
determine whether the digital signal is a preset digital signal; and
if the digital signal is the preset digital signal, determine the operation gesture according to the preset digital signal.

Embodiment 9. An intelligent wearing device, comprising:
a receiver, configured to receive an operation gesture signal;
a memory, configured to prestore a correspondence of a digital signal, an operation gesture, and a control instruction; and
a processor, configured to identify an operation gesture according to the operation gesture signal, wherein
the processor is further configured to determine, according to the correspondence stored in the memory, a control instruction corresponding to the identified operation gesture; and
the processor is further configured to control, according to the control instruction, the intelligent wearing device to perform a corresponding operation.

Embodiment 10. The intelligent wearing device according to embodiment 9, further comprising:
an infra-red transmitter, configured to: before the receiver receives the operation gesture signal, transmit an infra-red signal, wherein
the receiver is specifically configured to:
receive a reflected signal reflected by the operation gesture to the infra-red signal.

Embodiment 11. The intelligent wearing device according to embodiment 9, wherein the receiver is specifically configured to:
receive an infra-red signal transmitted by the operation gesture.

Embodiment 12. The intelligent wearing device according to any one of embodiments 9 to 11, wherein the processor is configured to identify the operation gesture according to the operation gesture signal comprises:
performing analog-to-digital conversion on the operation gesture signal to obtain a digital signal;
determining according to the correspondence stored in the memory, whether the digital signal is a preset digital signal; and
if the digital signal is the preset digital signal, determining the operation gesture according to the preset digital signal.

Finally, it should be noted that the embodiments are merely intended for describing the technical solutions of the present invention, but not for limiting the present invention. Although the present invention is described in detail with reference to the embodiments, persons of ordinary skill in the art should understand that they may still make modifications to the technical solutions described in the embodiments or make equivalent replacements to some or all technical features thereof, without departing from the scope of the technical solutions of the embodiments of the present invention.

## Claims

1. A system comprising:
an intelligent wearable device comprising a sensor; and
a mobile terminal in communication with the intelligent wearable device and configured to send an signal to the intelligent wearable device when receiving an incoming call,
wherein the intelligent wearable device is configured to:
receive the signal from the mobile terminal via Bluetooth;
display an interface for indicating the incoming call;
detect a gesture by a user using the sensor; and
perform an operation according to the gesture.

2. The system of claim 1, wherein the activation signal indicates the incoming call of the mobile terminal.

3. The system of claim 1 or 2, wherein the intelligent wearable device further comprises a screen, and wherein after receiving the activation signal, the intelligent wearable device is further configured to:
light up the screen; and
display the interface for indicating the incoming call.

4. The system of any one of claims 1-3, wherein the gesture comprises the user hovering over a screen of the intelligent wearable device for three seconds.

5. The system of any one of claims 1-3, wherein the gesture comprises the user hovering his or her hand over the intelligent wearable device for a predefined time period.

6. The system of any one of claims 1-5, wherein the intelligent wearable device further comprises an infrared light emitting diode, and wherein after receiving the activation signal, the intelligent wearable device further configured to: activate the infrared light emitting diode.

7. A controlling method, comprising
receiving, by an intelligent wearable device, an activation signal from a mobile terminal via Bluetooth;
displaying an interface for indicating an incoming call in the intelligent wearable device in response to receiving the activation signal;
detecting, by the intelligent wearable device, a user gesture using the sensor;
performing, by the intelligent wearable device, an operation according to the user gesture.

8. The method of claim 7, wherein the activation signal indicates an incoming call received by the mobile terminal.

9. The method of claim 7 or 8, wherein the user gesture comprises a user hovering his or her hand over the intelligent wearable device for a predefined time period.

10. The method of any one of claims 7-9, wherein the method further comprising:
lighting up the screen; and
displaying the interface for indicating the incoming call.

11. An intelligent wearable device, comprising:
a screen;
a receiver (201) configured to receive an activation signal from a mobile terminal;
a sensor configured to detect a gesture of a user; and
a processor (203) coupled to the screen, the receiver (201), and the sensor, wherein the processor (203) is configured to:
display an interface for indicating an incoming call in response to receiving the activation signal; and
perform an operation according to the gesture.

12. The intelligent wearable device of claim 11, wherein the activation signal indicates an incoming call was received by the mobile terminal.

13. The intelligent wearable device of claim 11 or 12, wherein the gesture comprises the user hovering his or her hand over the intelligent wearable device for a predefined time period.

14. The intelligent wearable device of any one of claims 11-13, wherein the processor (203) is further configured to:
light up the screen; and display, on the screen, the interface for indicating an incoming call.

15. The intelligent wearable device of any one of claims 11-14, wherein the processor (203) is further configured to:
activate the infrared light emitting diode.
